# EUROPÄISCHE PATENTSCHRIFT

(11) **EP 0 514 590 B1**
(45) Veröffentlichungstag und Bekanntmachung des Hinweises auf die Patenterteilung: **29.05.1996**
(21) Anmeldenummer: 91121306.4
(22) Anmeldetag: 12.12.1991
(51) Int. Cl.: G01F 23/22, G01F 23/24

(54) **Verfahren zur Füllstandsmessung**
Level measuring method
Procédé de mesure du niveau

(30) Priorität: 24.05.1991 DE 4117050
(43) Veröffentlichungstag der Anmeldung: 25.11.1992
(73) Patentinhaber: VDO Adolf Schindling AG, D-60487 Frankfurt (DE)
(72) Erfinder: Herm, Thomas, W-6209 Hohenstein 5 (DE)
(74) Vertreter: Klein, Thomas, Dipl.-Ing. (FH)

(56) Entgegenhaltungen:
- EP-A- 0 102 080
- EP-A- 0 249 521
- DE-C- 3 543 153
- US-A- 4 163 391

## Beschreibung

Die Erfindung betrifft ein Verfahren zur Füllstandsmessung mit einer Hitzedrahtmeßeinrichtung, bei dem ein Hitzedrahtgeber mit einem vorbestimmten Konstantstrom beschickt und ein Spannungsanstieg über den Hitzedrahtgeber innerhalb einer vorbestimmten Zeit detektiert wird.

Derartige Hitzedrahtgeber werden insbesondere im Kraftfahrzeugbereich zur Messung verschiedener Füllstandshöhen, beispielsweise des Ölpegels im Motor, verwendet. Der Strom heizt den Hitzedraht auf, wobei die Aufheizung auch abhängig von dem umgebenden Medium ist. Der Erwärmungsverlauf unterscheidet sich, wenn der Hitzedraht oder ein Teil davon von Luft umgeben ist, von dem, wenn er von einer Flüssigkeit, wie Öl oder Kraftstoff, umgeben ist. Mit zunehmendem Widerstand fällt bei konstantem Strom eine immer höhere Spannung über den Hitzedrahtgeber ab. Die Spannungserhöhung, also die Differenz der Spannung bei dem unbeheizten und dem über eine vorbestimmte Zeit beheizten Hitzedraht ist dann ein Maß dafür, wieweit der Hitzedraht in die zu messende Flüssigkeit eingetaucht ist und somit ein Maß für die Füllstandshöhe dieser Flüssigkeit (vgl. DE-C-35 43 153).

Gemäß der US-PS 4 163 391 ist ein Verfahren bekannt, bei welchem die über Widerstandselementen abfallende Spannung zum Zeitpunkt der Inbetriebnahme der Vorrichtung und zu einem späteren Zeitpunkt gemessen und verglichen wird.

Auch bei einem derartigen Verfahren zur Füllstandsmessung ist man bemüht, die erhaltenen Ergebnisse digital weiterzuverarbeiten. Hierbei stellt sich das Problem, daß die erhaltenen Ergebnisse oft mit großen Ungenauigkeiten behaftet sind. Die Ungenauigkeiten rühren zum einen daher, daß die Widerstände verschiedener Hitzedrahtgeber variieren, zum anderen aber auch daher, daß der Spannungsanstieg bezogen auf die Auflösungsmöglichkeiten der für die digitale Auswertung benötigten Analog/Digital-Wandler sehr gering ist. Wenn der Spannungsanstieg ausgehend von ca. 3 bis 4 V im Bereich von ca. 400 mV liegt, der Analog/Digital-Wandler aber eine Referenzspannung von nur 5 V und eine Auflösung von 8 bit hat, stellt jedes Inkrement einen Wert von ca. 19,5 mV dar. Die gesamte Auswertung würde dann mit ca. 20 Inkrementen erfolgen. Wenn bei derartig groben Auflösungen noch Unsicherheiten bezüglich des Hitzedrahtgebers hinzukommen, wird die Messung für viele Anwendungsbereiche zu ungenau.

Es ist daher eine Aufgabe der vorliegenden Erfindung, ein Verfahren der eingangs genannten Art anzugeben, das mit einfachen Mitteln eine genau Messung erlaubt.

Diese Aufgabe wird bei einem Verfahren der eingangs genannten Art dadurch gelöst, daß als Quelle des Konstantstroms eine durch eine Eingangsspannung gesteuerte Stromquelle verwendet wird und in einem Vorbereitungsabschnitt nach dem Zusammenbau der Hitzedrahtmeßeinrichtung die Eingangsspannung solange verändert wird, bis bei einem Eingangsspannungswert die Stromquelle den vorbestimmten Konstantstrom erzeugt, wobei in nachfolgenden Meßabschnitten dieser Eingangsspannungswert zur Ansteuerung der Stromquelle verwendet wird.

Die Messung unterscheidet sich also in zwei Abschnitte, der erste Abschnitt erfolgt unmittelbar nach der Fertigung. Die Hitzedrahtmeßeinrichtung wird hierbei sozusagen kalibriert. Durch die Eingangsspannung wird ein vorbestimmter Strom erzeugt, der im Hitzedrahtgeber zu dem gewünschten Spannungsabfall führt. Hiermit werden Widerstandsunterschiede zwischen einzelnen Hitzedrahtgebern und andere Schaltungstoleranzen eliminiert, so daß hierbei ein für alle Hitzedrahtmeßeinrichtungen gleiches Signal gewonnen werden kann.

Mit Vorteil wird der Eingangsspannungswert im Vorbereitungsabschnitt digital gespeichert und in den Meßabschnitten durch einen Mikroprozessor in Form eines pulsbreitenmodulierten Signals ausgegeben, das tiefpassgefiltert als Eingangsspannung der Stromquelle zugeführt wird. Die Abgleichung der Hitzedrahtmeßeinrichtung kann also vollautomatisch erfolgen. Einstellarbeiten, etwa die Verstellung eines Potentiometers entfallen. Die Eingangsspannung kann auf bekannte Art und Weise digitalisiert und als digitales Wort im Speicher des Mikroprozessors abgelegt werden. Der Mikroprozessor kann diesen Spannungswert dann einfach dadurch wieder erzeugen, daß er ein pulsbreitenmoduliertes Signal ausgibt. Nach einer Tiefpassfilterung verbleibt eine Spannung, die der Ausgangsspannung des Mikroprozessors multipliziert mit dem Tastverhältnis des pulsbreitenmodulierten Signals entspricht. Auf diese Art und Weise läßt sich die Eingangsspannung recht genau reproduzieren.

Gemäß einer Weiterbildung der Erfindung wird in den nach Folgenden Meßabschnitten durch den Mikroprozessor zu einem Startzeitpunkt eine Meßspannung als Startspannungswert ermittelt, der Startspannungswert gespeichert und im weiteren Verlauf der Messung von der Meßspannung abgezogen, wobei die Differenz zwischen Startspannungswert und Meßspannung als Füllstandssignal ausgegeben wird. Hierdurch läßt sich erreichen, daß man nur noch die Differenzspannung, also das eigentlich interessierende Signal verarbeiten muß. Der durch die Startspannung vorgegebene virtuelle Nullpunkt wird herausgerechnet.

In einer bevorzugten Ausführungsform wird die Differenz analog gebildet und das Füllstandssignal wird vor dem Ausgeben analog verstärkt. Da lediglich die Differenz als Füllstandshöhensignal interessiert, reicht es aus, diese am Ende ihrer Verarbeitung analog/digital zu wandeln. Um den Wandlungsbereich eines Analog/Digital-Wandlers voll ausnutzen zu können, wird das Signal gespreizt, also analog verstärkt. Auf diese Art und Weise ist es möglich, dem Füllstandssignal einen so großen Hub mitzuteilen, daß der Arbeitsbereich des Analog/Digital-Wandlers voll ausgenutzt werden kann. Bei einem 8 Bit-Analog/Digital-Wandler kann dann die Auflösung mit 256 Schritten erfolgen. Der Digitalisierungsfehler wird dann vernachlässigbar klein.

Bevorzugterweise wird der Startspannungswert analog/digital-gewandelt, mit Hilfe des Mikroprozessors digital gespeichert und unter Steuerung des Mikroprozessors digital/analog-gewandelt, bevor er zur Bildung der Differenz verwendet wird. Der Startspannungswert wird also mit Hilfe des Mikroprozessors zunächst ermittelt, dann gespeichert und für die weitere Bearbeitung des Ausgangssignals des Hitzedrahtgebers wieder verwendet. Auf diese Art und Weise kann man hardwaremäßig realisierte Sample-Hold-Elemente vermeiden.

Auch ist von Vorteil, daß der Mikroprozessor zum Startzeitpunkt anstelle des Startspannungswerts einen vorbestimmten Spannungswert ausgibt. Solange der Mikroprozessor noch keinen Startspannungswert ermittelt hat, würde er normalerweise einen unbestimmten Wert ausgeben. Dies könnte zu einer Verfälschung des Startspannungswertes führen. Da aber der vom Mikroprozessor zum Startzeitpunkt ausgegebene Spannungswert bekannt ist, läßt sich aus dem ausgegebenen Wert und dem bekannten Wert auf den Startspannungswert zurückrechnen.

Dies ist besonders einfach, wenn der Spannungswert Null ist.

Von besonderem Vorteil ist es, daß zur Speicherung und Bildung des Eingangsspannungswerts und zur Speicherung und Bildung des Startspannungswerts der gleiche Mikroprozessor verwendet wird. Damit kann man den Aufwand an Bauteilen relativ niedrig halten.

Die Erfindung wird im folgenden anhand eines bevorzugten Ausführungsbeispiels beschrieben. Darin zeigen:
Fig. 1 eine schematische Schaltungsanordnung und
Fig. 2 einen schematischen Spannungsverlauf.

Eine Hitzedrahtmeßeinrichtung weist eine spannungsgesteuerte Stromquelle 1, eine Stromendstufe 2, eine Subtrahierstufe 3, eine Verstärkungsstufe 4 und einen Hitzedrahtgeber 5 auf.

Die spannungsgesteuerte Stromquelle 1 erzeugt an ihrem Ausgang einen konstanten Strom, dessen Höhe von einer Eingangsspannung PWM an einem Eingang 6 abhängt.

Die spannungesteuerte Stromquelle 1 weist dazu einen Batterieanschluß 7 auf, der mit einer Spannungsquelleneinrichtung 8 verbunden ist. Die Spannungsquelleneinrichtung 8 ist mit einem Widerstand R1 verbunden, dessen anderes Ende mit dem Kollektor eines Transistors T1 verbunden ist. Der Emitter des Transistors T1 ist mit einem Widerstand R3 verbunden, dessen anderes Ende mit Masse verbunden ist. Die Basis des Transistors T1 ist mit einem Operationsverstärker V1 verbunden, wobei der Emitter des Transistors T1 mit dem invertierenden Eingang des Operationsverstärkers V1 verbunden ist. Der nicht invertierende Eingang des Operationsverstärkers V1 ist mit dem Eingang 6 über einen durch einen Widerstand R4 und einen Kondensator C1 gebildeten Tiefpassfilter verbunden.

Die Stromendstufe 2 weist einen Operationsverstärker V2 auf, dessen Ausgang mit der Basis eines Transistors T2 verbunden ist. Der invertierende Eingang des Operationsverstärkers V2 ist über einen Widerstand R2 mit dem Ausgang der Stromquelleneinrichtung 8 verbunden, mit dem auch der Widerstand R1 verbunden ist. Der nicht invertierende Eingang des Operationsverstärkers V2 ist mit dem Kollektor des Transistors T1 verbunden.

Der Hitzedrahtgeber 5 ist mit einem Anschluß mit dem Emitter des Transistors T2 verbunden und mit dem anderen Anschluß mit Masse.

Die Subtrahierstufe 3 weist einen Operationsverstärker V3 auf, dessen invertierender Eingang einerseits Uber einen Widerstand R5 mit Masse und andererseits über einen Widerstand R6 mit dem Emitter des Transistors T2 verbunden ist. Der nicht invertierende Eingang des Operationsverstärkers V3 ist über einen Widerstand R7 mit einem Ausgang eines Digital/Analog-Wandlers 9 verbunden. Der Ausgang des Operationsverstärkers V3 ist Uber einen Widerstand R8 auf seinen invertierenden Eingang zurückgekoppelt.

Die Verstärkerstufe 4 weist einen Operationsverstärker V4 auf, dessen nicht invertierender Eingang Uber einen Widerstand R9 mit dem Ausgang des Operationsverstärkers V3 aus der Subtrahierstufe 3 verbunden ist. Der Ausgang des Operationsverstärkers V4 ist Uber einen Widerstand R10 auf den invertierenden Eingang des Operationsverstärkers V4 zurückgekoppelt. Der invertierende Eingang des Operationsverstärkers V4 ist weiterhin Uber einen Widerstand R11 mit Masse verbunden.

Der Ausgang des Operationsverstärkers V3 ist mit einem ersten Analog/Digital-Wandler 10 verbunden. Der Ausgang des Operationsverstärkers V4 ist mit einem zweiten Analog/Digital-Wandler 11 verbunden. Die Ausgänge der beiden Analog/Digital-Wandler 10, 11 sind mit einem Mikroprozessor 12 verbunden, der einen Speicher 13 aufweist. Der Mikroprozessor 12 ist einerseits mit dem Eingang 6 der spannungsgesteuerten Stromquelle 1 verbunden, andererseits mit dem Eingang des Digital/Analog-Wandlers 9.

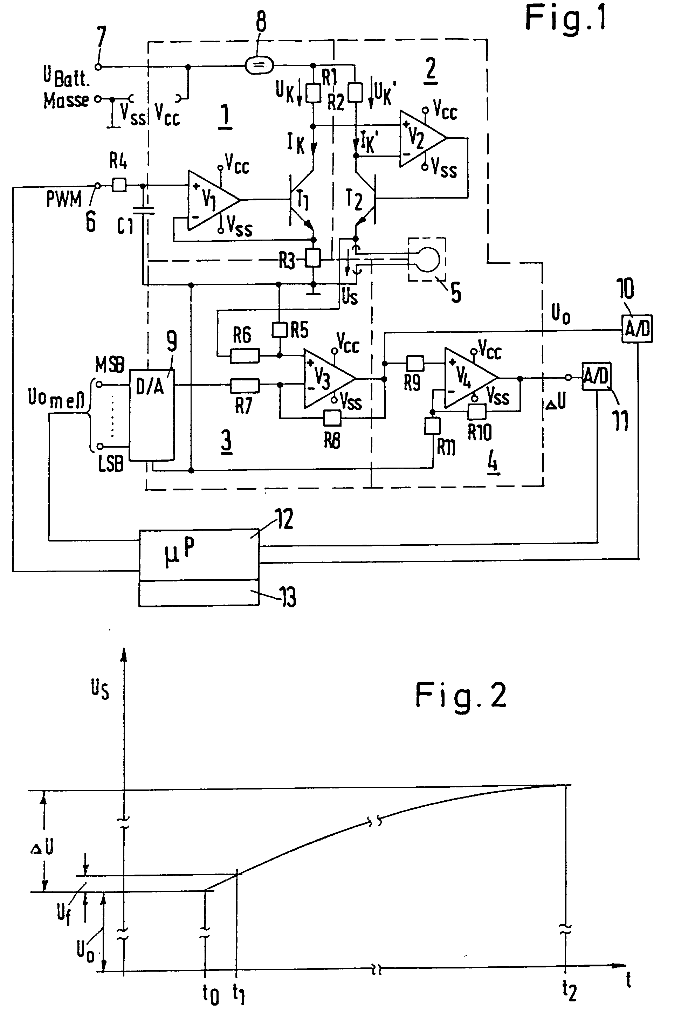

Alle Operationsverstärker sind über Versorgungsanschlüsse V_{cc} und Vₛₛ mit Spannung versorgt. Über diesen Anschlüssen liegt im wesentlichen die Batteriespannung an, wie dies in Fig. 1 angedeutet ist.

Die Hitzedrahtmeßeinrichtung arbeitet wie folgt:

Der Mikroprozessor 12 erzeugt ein pulsbreitenmoduliertes Spannungs-Signal, das über den aus R4 und C1 gebildeten Tiefpassfilter dem nicht invertierenden Eingang des Operationsverstärkers V1 zugeführt wird. Der Operationsverstärker V1 steuert den Transistor T1 so auf, daß am Widerstand R3 eine Spannung abfällt, die der am nicht invertierenden Eingang des Operationsverstärkers V1 entspricht. Diese Spannung wird durch einen Strom IK hervorgerufen, der sich aufgrund der Eingangsspannung PWM am Eingang 6 der spannungsgesteuerten Stromquelle einstellt. Durch Variation der Spannung PWM am Eingang 6 läßt sich der Strom IK variieren.

Den beiden Eingängen des Operationsverstärkers V2 werden die Spannungen zugeführt, die an den Kollektoren der Transistoren T1 und T2 anliegt. Der Operationsverstärker V2 steuert demnach den Transistor T2 so auf, daß an dessen Kollektor die gleiche Spannung anliegt wie am Kollektor des Transistors T1. Der Transistor T2 wird dabei so gesteuert, daß sich am Widerstand R2 ein Spannungsabfall UK' ergibt, der genau dem Spannungsabfall UK am Widerstand R1 entspricht. Dieser Strom hat die Größe IK'. Dieser Strom IK' wird durch den Hitzedrahtgeber 5 geleitet und verursacht dort einen Spannungsabfall U_{S}.

In einem Vorbereitungsabschnitt wird, nachdem die Hitzedrahtmeßeinrichtung mit dem Hitzedrahtgeber 5 zusammengebaut worden ist, die Spannung U_{S} Uber den Hitzedrahtgeber gemessen. Die Eingangsspannung PWM wird dann solange variiert, bis sich unter vorbestimmten Bedingungen, wie Temperatur, eine vorbestimmte Spannung einstellt. Die Variation dieser Eingangsspannung PWM wird dabei beispielsweise mit Hilfe des Mikroprozessors 12 durchgeführt. Der Mikroprozessor 12 versorgt den Eingang des Digital/Analog-Wandlers 9 mit dem Wert Null. Am Ausgang des Operationsverstärkers V3 läßt sich dann eine Spannung UO abnehmen, die der Spannung U_{S} entspricht. Diese Spannung wird über den Analog/Digital-Wandler 10 wieder auf den Mikroprozessor 12 zurückgekoppelt. Der Mikroprozessor 12 variiert die Spannung PWM solange, bis die Spannung UO einer Spannung UOSoll entspricht. Wenn dieser Wert erreicht ist, wird die Spannung PWM im Speicher 13 gespeichert. Genauer gesagt wird eine das zur Erzeugung der pulsbreitenmodulierten Spannung PWM verwendeten Tastverhältnis kennzeichnende Zahl im Speicher 13 gespeichert.

Wenn die pulsbreitenmodulierte Spannung abgespeichert ist, ist der Abgleich vorgenommen worden, d.h. auch bei unterschiedlichen Hitzedrahtgebern 5 erscheint am Ausgang immer das gleiche Signal. Der Speicher 13 ist ein nicht flüchtiger Speicher, beispielsweise ein EEPROM.

In späteren Meßabschnitten wird zu einem Zeitpunkt tO der Strom IK' in den Hitzedrahtgeber 5 eingeprägt. Der Mikroprozessor 12 gibt zu diesem Zeitpunkt ein Signal an den Digital/Analog-Wandler 9, das den Spannungswert Null repräsentiert. Der Digital/Analog-Wandler 9 gibt also an seinem Ausgang die Spannung Null aus. Am Ausgang des Operationsverstärkers V3 ergibt sich dann die resultierende Spannung UO, die der Spannung U_{S} über den Hitzedrahtgeber 5 entspricht. Das ist der sogenannte Startspannungswert UOMESS. Diese Spannung UO wird über den Analog/Digital-Wandler 10 dem Mikroprozessor 12 zugeführt, der sie im Speicher 13 speichert und in nachfolgenden Zyklen dem Digital/Analog-Wandler 9 zuführt. Ab dem Zeitpunkt tl wird dem invertierenden Eingang des Operationsverstärkers V3 also die Spannung UO zugeführt. Am Ausgang des Operationsverstärkers V3 erscheint dann lediglich die Differenz zwischen der Spannung U_{S} und dem Startspannungswert UOMESS. Diese Spannung wird im Operationsverstärker V4 verstärkt, wobei hierbei der Verstärkungsfaktor V = 1 + R10/R11 ist. Am Ausgang des Operationsverstärkers V4 erscheint dann die Spannung ΔU. Diese Spannung ΔU wird mit Hilfe des Analog/Digital-Wandlers 11 digitalisiert und dem Mikroprozessor 12 zur weiteren Auswertung zugeführt. Die weitere Auswertung kann beispielsweise in einer Anzeige bestehen.

Die Verstärkung der Operationsverstärker V1, V2, V3 und V4 und der Auflösungsbereich der Analog/Digital-Wandler 10, 11 und des Digital/Analog-Wandlers 9 ist durch die Versorgungsspannung U_{Batt.} begrenzt. Dadurch, daß am Ausgang der Subtrahierstufe 3 nur noch das interessierende Signal, nämlich die Differenz zwischen der Spannung U_{S} über den Hitzedrahtgeber 5 und dem Startspannungswert UOMESS über den Hitzedrahtgeber 5 erscheint und diese Differenz soweit verstärkt wird, daß sie den Arbeitsbereich des Analog/Digital-Wandlers 11 voll ausnutzt, ergibt sich eine wesentlich verbesserte Auflösung des vom Hitzedrahtgeber 5 erzeugten Signals. Zu einem Zeitpunkt t2 wird die Spannung ΔU ermittelt. In dem Zeitraum zwischen t0 und t2, beispielsweise innerhalb von 2 sec., ist die Spannung von dem Startwert UOMESS auf einen Wert UOMESS + ΔU angestiegen. Dieses ΔU kann mit einer großen Genauigkeit ausgewertet werden, so daß sich recht zuverlässig Angaben über den vom Hitzedrahtgeber 5 ermittelten Füllstand machen lassen. Da darüberhinaus im Vorbereitungsabschnitt bereits ein Abgleich stattgefunden hat, der alle Schwankungen zwischen verschiedenen Hitzedrahtgebern auffängt, läßt sich ein Ausgangssignal mit hoher Genauigkeit gewinnen. Da sowohl der Abgleich als auch die Messung unter der Steuerung des Mikroprozessors 12 erfolgen können, läßt sich das Verfahren auch mit relativ einfachen Mitteln realisieren.

## Patentansprüche

1. Verfahren zur Füllstandsmessung mit einer Hitzedrahtmeßeinrichtung, bei dem ein Hitzedrahtgeber mit einem vorbestimmten Konstantstrom beschickt und ein Spannungsanstieg über den Hitzedrahtgeber innerhalb einer vorbestimmten Zeit detektiert wird, **dadurch gekennzeichnet**, daß als Quelle des Konstantstroms eine durch eine Eingangsspannung gesteuerte Stromquelle verwendet wird und in einem Vorbereitungsabschnitt nach dem Zusammenbau der Hitzedrahtmeßeinrichtung die Eingangsspannung unter vorbestimmten Bedingungen solange verandert wird, bis bei einem Eingangsspannungswert die Stromquelle den vorbestimmten Konstantstrom erzeugt, wobei in nachfolgenden Meßabschnitten dieser Eingangsspannungswert zur Ansteuerung der Stromquelle verwendet wird.

2. Verfahren nach Anspruch 1, **dadurch gekennzeichnet,** daß der Vorbereitungsabschnitt und auch die nachfolgenden Meßabschnitte unter Steuerung eines Mikroprozessors erfolgen.

3. Verfahren nach Anspruch 2, **dadurch gekennzeichnet,** daß der Eingangsspannungswert im Vorbereitungsabschnitt digital gespeichert und in den Meßabschnitten durch den Mikroprozessor in Form eines pulsbreitenmodulierten Signals ausgegeben wird, das tiefpassgefiltert als Eingangsspannung der Stromquelle zugeführt wird.

4. Verfahren nach Anspruch 2 oder 3, **dadurch gekennzeichnet**, daß in den nachfolgenden Meßabschnitten durch den Mikroprozessor zu einem Startzeitpunkt eine Meßspannung als Startspannungswert ermittelt wird, daß der Startspannungswert gespeichert und im weiteren Verlauf der Messung von der Meßspannung abgezogen wird, wobei die Differenz zwischen Startspannungswert und Meßspannung als Füllstandssignal ausgegeben wird.

5. Verfahren nach Anspruch 4, **dadurch gekennzeichnet,** daß die Differenz analog gebildet wird und das Füllstandssignal vor dem Ausgeben analog verstärkt wird.

6. Verfahren nach Anspruch 4 oder 5, **dadurch gekennzeichnet,** daß der Startspannungswert analog/digital-gewandelt, mit Hilfe des Mikroprozessors digital gespeichert und unter Steuerung des Mikroprozessors digital/analoggewandelt wird, bevor er zur Bildung der Differenz verwendet wird.

7. Verfahren nach einem der Ansprüche 4 bis 6, **dadurch gekennzeichnet,** daß der Mikroprozessor zum Startzeitpunkt anstelle des Startspannungswerts einen vorbestimmten Spannungswert ausgibt.

8. Verfahren nach Anspruch 7, **dadurch gekennzeichnet,** daß der vorbestimmte Spannungswert Null ist.

9. Verfahren nach einem der Ansprüche 1 bis 8, **dadurch gekennzeichnet,** daß zur Speicherung und Bildung des Eingangsspannungswerts und zur Speicherung und Bildung des Startspannungswertes der gleiche Mikroprozessor verwendet wird.

## Claims

1. Filling level measuring method with a hot-wire measuring device, in which method a hot-wire sensor is fed with a predetermined constant current and a rise in voltage is detected by means of the hot-wire sensor. within a predetermined time, characterized in that a current source which is controlled by an input voltage is used as source of the constant current and after the assembly of the hot-wire measuring device in a preparatory section the input voltage is changed under predetermined conditions until the current source produces the predetermined constant current at an input voltage value, this input voltage value being used to drive the current source in subsequent measurement sections.

2. Method according to Claim 1, characterized in that the preparatory section and also the subsequent measurement section take place under the control of a microprocessor.

3. Method according to Claim 2, characterized in that the input voltage value is digitally stored in the preparatory section and is output by the microprocessor in the measurement sections in the form of a pulse-width modulated signal which is fed low-pass filtered as an input voltage to the current source.

4. Method according to Claim 2 or 3, characterized in that a measurement voltage is detected as a starting voltage value by the microprocessor at a starting time in the subsequent measurement sections, in that the starting voltage value is stored and in the further course of the measurement is subtracted from the measured voltage, the difference between the starting voltage value and the measured voltage being output as a filling level signal.

5. Method according to Claim 4, characterized in that the difference is formed in an analog fashion and the filling level signal is amplified in an analog fashion before being output.

6. Method according to Claim 4 or 5, characterized in that the starting voltage value is subjected to an analog-digital conversion, stored in digital form using the microprocessor and subjected to a digital-analog conversion under the control of the microprocessor before being used to form the difference.

7. Method according to one of Claims 4 to 6, characterized in that at the starting time the microprocessor outputs a predetermined voltage value instead of the starting voltage value.

8. Method according to Claim 7, characterized in that the predetermined voltage value is zero.

9. Method according to one of Claims 1 to 8, characterized in that the same microprocessor is used for storing and forming the input voltage value and for storing and forming the starting voltage value.

## Revendications

1. Procédé de mesurage de niveaux d'emplissage à l'aide d'un dispositif mesureur à fil chaud, dans lequel un indicateur à fil chaud est alimenté par un courant constant prédéterminé et un accroissement de tension est détecté, par l'intermédiaire de l'indicateur à fil chaud, dans les limites d'un laps de temps prédéterminé, caractérisé par le fait qu'une source de courant, commandée par une tension d'entrée, est utilisée en tant que source du courant constant et, dans une zone opérationnelle préparatoire, après l'assemblage du dispositif mesureur à fil chaud, la tension d'entrée est modifiée dans des conditions prédéterminées jusqu'à ce que la source de courant engendre le courant constant prédéterminé à une certaine valeur de la tension d'entrée, procédé dans lequel, dans des zones ultérieures de mesurage, cette valeur de la tension d'entrée est utilisée pour l'activation de la source de courant.

2. Procédé selon la revendication 1, caractérisé par le fait que la zone opérationnelle préparatoire, et également les zones ultérieures de mesurage, sont soumises à la commande d'un microprocesseur.

3. Procédé selon la revendication 2, caractérisé par le fait que la valeur de la tension d'entrée est mémorisée en mode numérique dans la zone opérationnelle préparatoire, puis est délivrée dans les zones de mesurage, par l'intermédiaire du microprocesseur, sous la forme d'un signal à largeur d'impulsions modulée qui, après filtrage passe-bas, est appliqué à la source de courant en tant que tension d'entrée.

4. Procédé selon la revendication 2 ou 3, caractérisé par le fait que, dans les zones ultérieures de mesurage, une tension de mesurage est déterminée à un instant initial, par l'intermédiaire du microprocesseur, en tant que valeur initiale de tension ; et par le fait que la valeur initiale de tension est mémorisée, puis soustraite de la tension de mesurage durant la poursuite du mesurage, la différence, entre la valeur initiale de tension et la tension de mesurage, étant délivrée en tant que signal du niveau d'emplissage.

5. Procédé selon la revendication 4, caractérisé par le fait que la différence est formée en mode analogique, et le signal du niveau d'emplissage est amplifié en mode analogique préalablement à la délivrance.

6. Procédé selon la revendication 4 ou 5, caractérisé par le fait que la valeur initiale de tension est soumise à une conversion analogique/numérique, est mémorisée numériquement à l'aide du microprocesseur, puis est soumise à une conversion numérique/analogique, sous la commande du microprocesseur, avant d'être utilisée pour former la différence.

7. Procédé selon l'une des revendications 4 à 6, caractérisé par le fait que, à l'instant initial, le microprocesseur délivre une valeur de tension prédéterminée à la place de la valeur initiale de tension.

8. Procédé selon la revendication 7, caractérisé par le fait que la valeur de tension prédéterminée est de zéro.

9. Procédé selon l'une des revendications 1 à 8, caractérisé par le fait que le même microprocesseur est utilisé pour mémoriser et former la valeur de la tension d'entrée, et pour mémoriser et former la valeur initiale de tension.
